# EUROPEAN PATENT SPECIFICATION

(11) **EP 4 120 436 B1**
(45) Date of publication and mention of the grant of the patent: **30.04.2025**
(21) Application number: 21792523.9
(22) Date of filing: 29.03.2021
(51) Int. Cl.: H01M 10/613, H01M 10/625, H01M 10/643, H01M 10/6551, H01M 10/6555

(54) **BATTERY PACK**
BATTERIEPACK
BLOC-BATTERIE

(30) Priority: 23.04.2020 JP 2020076589
(43) Date of publication of application: 18.01.2023
(73) Proprietor: Toyoda Gosei Co., Ltd., Kiyosu-shi, Aichi 452-8564 (JP)
(72) Inventor: OYAKE, Takafumi, Nagakute-shi, Aichi 480-1192 (JP); KUSAKABE, Makoto, Nagakute-shi, Aichi 480-1192 (JP); ISHIGAKI, Masanori, Nagakute-shi, Aichi 480-1192 (JP); KUSABA, Kosuke, Kiyosu-shi, Aichi 452-8564 (JP); YOSHIDA, Satoshi, Kiyosu-shi, Aichi 452-8564 (JP); FUJII, Kohei, Kiyosu-shi, Aichi 452-8564 (JP)
(74) Representative: Kramer Barske Schmidtchen Patentanwälte PartG mbB
(86) International application number: PCT/JP2021/013235
(87) International publication number: WO 2021/215197

(56) References cited:
- WO-A1-2018/003478
- CN-U- 206 471 454
- JP-A- 2002 373 708
- JP-A- 2014 191 968
- JP-A- 2019 021 402
- US-A1- 2011 244 299
- US-A1- 2015 079 444

## Description

### CROSS REFERENCE TO RELATED APPLICATIONS

This application is based upon and claims benefit of priority from Japanese Patent Application No. 2020-076589, filed on April 23, 2020.

### BACKGROUND

### FIELD

The present disclosure relates to a battery pack.

### RELATED ART

Conventionally, a battery pack including a plurality of batteries housed in a case is known. The battery pack needs to dissipate heat generated by each of the plurality of batteries to an outside of the battery pack. For example, Patent Literature 1 discloses a temperature management system which includes thermally conductive members in contact with each of the plurality of batteries aligned in two rows, and dissipates heat of the batteries to an outside by a refrigerant flowing inside the thermally conductive members. Furthermore, Patent Literature 2 discloses a battery module which dissipates heat generated by cylindrical batteries to an outside by using a thermally conductive material filled between the plurality of cylindrical batteries. Patent Literature 3 (basis for the preamble of claim 1) discloses another battery pack. Furthermore, Non-Patent Literature 1 discloses a heat management system in which both end parts of thermally conductive members in contact with each of a plurality of batteries are connected with a case, and which dissipates heat generated by the batteries to an outside.

### Citation List

### Patent Literature

Patent Literature 1: US 2011/0212356 A1
Patent Literature 2: JP 2018-060594 A
Patent Literature 3: JP 2002-373708 A

### Non-Patent Literature

Non-Patent Literature 1: Suman Basu et al., Applied Energy 181, 1-13 (2016)

### SUMMARY

However, the above prior arts still have a room for improvement to improve cooling efficiency of batteries of a battery pack while reducing manufacturing cost of the battery pack. According to, for example, a technique disclosed in Patent Literature 1, the refrigerant which cools the batteries flows inside the thermally conductive members, and then flows in flow passages formed inside a case. Hence, the thermally conductive members and the case need to be connected so as not to cause leakage of a liquid. Hence, the thermally conductive members need to be precisely manufactured, and manufacturing cost is high. Furthermore, according to a technique disclosed in Patent Literature 2, it is necessary to fill the thermally conductive material between the plurality of cylindrical batteries without gaps. This filling process requires a time. Therefore, manufacturing cost increases. Furthermore, in a case where the thermally conductive material is not sufficiently filled between the plurality of cylindrical batteries, cooling efficiency is concerned to lower. Furthermore, according to a technique disclosed in Non-Patent Literature 1, in a case where the length of the thermally conductive member is shorter than an internal dimension of the case due to a manufacturing error, the both end parts of the thermally conductive member cannot be connected with the case. Therefore, heat of the batteries is hardly dissipated at the end parts which are not connected with the case. Therefore, it is concerned that cooling efficiency varies between the different batteries, and it is not possible to obtain desired cooling efficiency.

The present disclosure has been made to handle with at least part of the above-described issue, and an object of the present disclosure is to provide a technique which improves cooling efficiency of batteries of a battery pack while reducing manufacturing cost of the battery pack.

The present disclosure has been made to solve at least part of the above-described issue, and can be realized as following aspects.
(1) One aspect of the present disclosure provides a battery pack according to claim 1.
   According to this aspect, it is possible to transfer, to the case, heat generated by the batteries through the thermally conductive plate in contact with the batteries, and the grip part in contact with at least one of the two principal surfaces of the thermally conductive plate. Furthermore, even in a case where a position of the side surface of the thermally conductive plate with respect to the grip part is displaced from a designed position due to a manufacturing error of one or both of the thermally conductive plate and the case, it is possible to regulate the displacement in the direction orthogonal to each of the two principal surfaces of the end part of the thermally conductive plate, and transfer to the case the heat generated by the batteries through the grip part in contact with at least one of these two principal surfaces. When the thermally conductive plate and the plurality of batteries in contact with the thermally conductive plate cause abnormalities, it is possible to easily detach from the case the thermally conductive plate and the plurality of batteries in contact with the thermally conductive plate to exchange with a new thermally conductive plate and a plurality of new batteries in contact with the new thermally conductive plate. It is possible to transfer heat from the side surface of the thermally conductive plate to the surface which connects the two facing surfaces which define the slit through the grease. Consequently, even in a case where the positions of the side surfaces of the both ends of the thermally conductive plate with respect to the grip part are displaced due to a manufacturing error of one or both of the thermally conductive plate and the case, or an assembly error of the thermally conductive plate and the case, it is possible to transfer heat from the side surface of the thermally conductive plate to the grip part.
(2) The battery pack according to the above aspect can also adopt an aspect with a configuration according to claim 2.
   According to this aspect, it is possible to efficiently transfer the heat of the batteries to the case through the both end parts of the thermally conductive plate. Furthermore, even in a case where positions of the side surfaces of the both ends of the thermally conductive plate with respect to the grip part are displaced due to a manufacturing error of one or both of the thermally conductive plate and the case, or an assembly error of the thermally conductive plate and the case, it is possible to transfer the heat generated by the batteries to the case.
(3) The battery pack according to the above aspect can also employ an aspect with a configuration according to claim 3. According to this aspect, it is possible to place a larger area of the thermally conductive plate in contact with the battery in the recessed part compared to an aspect where the thermally conductive plate is in planar contact with a battery. Consequently, the thermally conductive plate can efficiently take heat from the battery compared to an aspect where the thermally conductive plate is in planar contact with a battery. Furthermore, according to this aspect, it is possible to reduce a dimension of a range occupied by the thermally conductive plate and the batteries in a recess direction of the recessed part compared to an aspect where the thermally conductive plate does not include the recessed part. Consequently, it is possible to more highly densely arrange the batteries in the case.
(4) The battery pack according to the above aspect can also employ an aspect with a configuration according to claim 4.

According to this aspect, it is possible to reduce a dimension of a range occupied by the thermally conductive plate and the batteries in contact with the both sides of the thermally conductive plate in the direction orthogonal to a direction in which the plurality of other recessed parts are aligned while arranging the batteries on the both sides of the thermally conductive plate. Consequently, it is possible to more highly densely arrange the batteries in the case.

Note that the present disclosure can be realized as various aspects, and can be realized as forms such as a system including the battery pack, a battery pack manufacturing method, a computer program which causes manufacturing of the battery pack to be executed, a server apparatus which distributes this computer program, and a non-transitory storage medium which stores this computer program.

### BRIEF DESCRIPTION OF THE DRAWINGS

Fig. 1 is a schematic view illustrating a schematic configuration of a battery pack according to a first embodiment.
Fig. 2A is a partial enlarged view of the battery pack.
Fig. 2B is an enlarged view illustrating an enlarged A part in Fig. 2A.
Fig. 3A is a perspective view of battery modules included in the battery pack.
Fig. 3B is an explanatory view illustrating processing of exchanging a battery module 15 in a battery pack 1.
Fig. 4 is a partial cross-sectional view of a battery pack according to the present embodiment.
Fig. 5A is a view for explaining an issue of a battery pack according to a comparative example.
Fig. 5B is a view for explaining the issue of the battery pack according to the comparative example.
Fig. 6A is a view for explaining an effect of the battery pack according to the present embodiment.
Fig. 6B is a view for explaining the effect of the battery pack according to the present embodiment.
Fig. 7 is a schematic view illustrating a schematic configuration of a battery pack according to a second embodiment.

### DETAILED DESCRIPTION

### A. First Embodiment

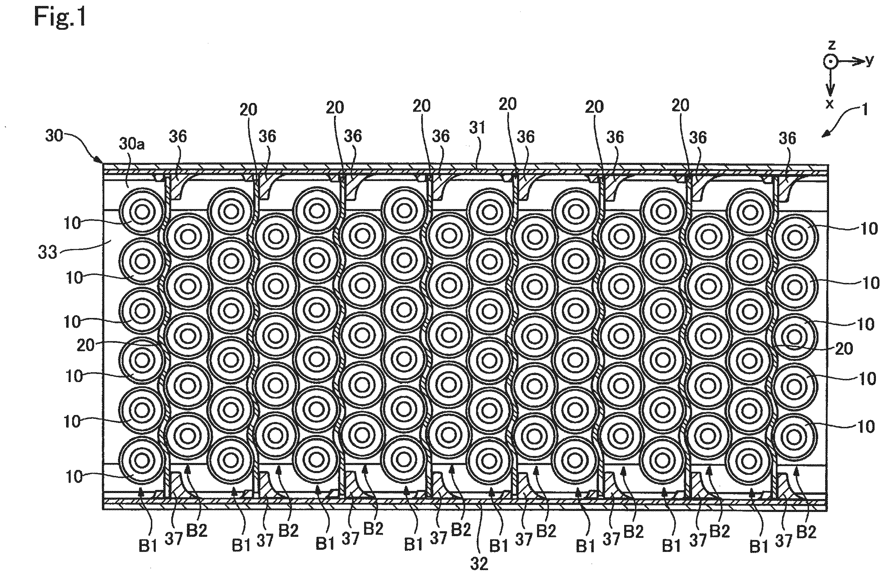

Fig. 1 is a schematic view illustrating a schematic configuration of a battery pack 1 according to a first embodiment. The battery pack 1 according to the first embodiment is used as, for example, an in-vehicle battery of an electric vehicle for which high output is requested. The battery pack 1 includes a plurality of batteries 10, a plurality of thermally conductive members 20 and a case 30. Note that an x axis direction, a y axis direction and a z axis direction are defined as follows for convenience of description. A direction in which the thermally conductive members 20 extend is the x axis direction. The x axis direction is also a direction in which the batteries 10 in contact with one surface of the thermally conductive member 20 are aligned. A direction vertical to an x axis on a horizontal plane which passes all the batteries 10 housed in the case 30 is the y axis direction. Furthermore, the direction vertical to the x axis direction and the y axis direction is the z axis direction.

The battery 10 is a lithium ion battery having a cylindrical shape. The battery pack 1 includes the plurality of batteries 10. According to the present embodiment, respective center axes of the plurality of batteries 10 are arranged in substantially parallel to a z axis. The batteries 10 are electrically connected with an unillustrated input/output unit of the battery pack 1. The batteries 10 receive and store, for example, electrical energy supplied from an external power supply of an electric vehicle and electrical energy generated by deceleration of the running electrical vehicle via this input/output unit. Furthermore, the batteries 10 output the electrical energy for driving a motor included in the electrical vehicle via the input/output unit.

As illustrated in Fig. 1, the battery pack 1 includes rows B1 in which the six batteries 10 are aligned along the x axis direction, and rows B2 in which the five batteries 10 are aligned along the x axis direction. The rows B1 of the batteries 10 are referred to as the "battery rows B1" in this description. The rows B2 of the batteries 10 are referred to as the "battery rows B2" in this description. The battery pack 1 includes the eight battery rows B1 and the eight battery rows B2. The battery rows B1 and the battery rows B2 are alternately arranged in the y axis direction (see Fig. 1).

The thermally conductive member 20 is a member of a plate shape formed by a material having high thermal conductivity such as metal. Note that a shape whose dimension in a thickness direction is 1/4 or less than a smaller dimension of a dimension in a vertical direction and a dimension in a horizontal direction is referred to as a "plate shape" in this description. The plate shape includes a corrugated plate.

As illustrated in Fig. 1, the battery pack 1 includes the eight thermally conductive members 20. Two surfaces of the largest plates are referred to as "principal surfaces" in this description. The thermally conductive member 20 includes two principal surfaces 21 and 22 to each of which the plurality of batteries 10 are fixed. A plurality of recessed and protrusion parts are formed on the principal surfaces 21 and 22 of the thermally conductive member 20.

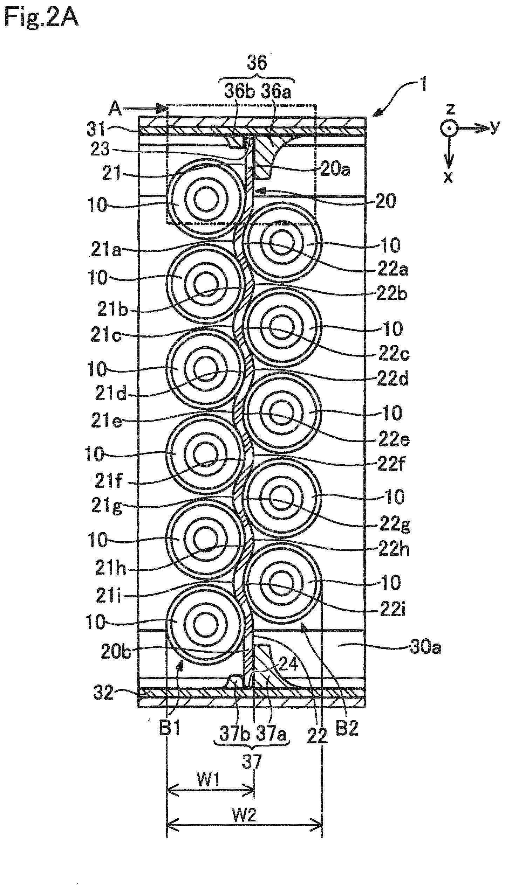

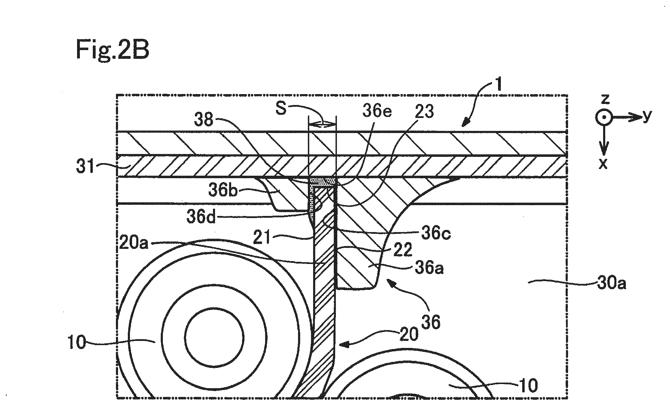

Fig. 2A is a partial enlarged view of the battery pack 1. Fig. 2B is an enlarged view illustrating an enlarged A part in Fig. 2A. The thermally conductive member 20 includes recessed parts 21b, 21d, 21f and 21h. The thermally conductive member 20 is in contact with the one battery 10 of the plurality of batteries 10 in each of the recessed parts 21b, 21d, 21f and 21h. The thermally conductive member 20 further includes a plurality of other recessed parts 22a, 22c, 22e, 22g and 22i on the surface 22 opposite to the surface 21 provided with the recessed parts 21b, 21d, 21f and 21h of the thermally conductive member 20. The thermally conductive member 20 is in contact with the one battery 10 of the plurality of batteries 10 in each of the plurality of other recessed parts 22a, 22c, 22e, 22g and 22i.

More specifically, as illustrated in Fig. 2A, the five protrusion parts and the four recessed parts are formed along the x axis direction and between one end part 20a on a minus x axis side and an other end part 20b on a plus x axis side on the principal surface 21 on a minus y axis side of the thermally conductive member 20. These protrusion parts and recessed parts are aligned and arranged in order of a protrusion part 21a, the recessed part 21b, a protrusion part 21c, the recessed part 21d, a protrusion part 21e, the recessed part 21f, a protrusion part 21g, the recessed part 21h and a protrusion part 21i from the one end part 20a side.

The batteries 10 of the battery row B1 are fixed to the principal surface 21. The four batteries 10 of the six batteries 10 of the battery row B1 are respectively fixed to the recessed part 21b, the recessed part 21d, the recessed part 21f and the recessed part 21h. The principal surface 21 on the minus y axis side of the thermally conductive member 20 is also referred to as "one principal surface". The curvatures of recessed surfaces of the recessed parts 21b, 21d, 21f and 21h substantially match with curvatures of outer circumferential surfaces of the batteries 10 of the columnar shapes.

According to this configuration, it is possible to place a larger area of the thermally conductive member 20 in contact with the batteries in the recessed parts 21b, 21d, 21f and 21h compared to an aspect where the thermally conductive member 20 is in planar contact with the batteries 10. Consequently, the thermally conductive member 20 can efficiently take heat from the batteries compared to an aspect where the thermally conductive member 20 is in planar contact with the batteries.

Furthermore, according to this configuration, it is possible to reduce a dimension of a range W1 occupied by the thermally conductive member 20 and the batteries 10 in a recess direction of the recessed parts 21b, 21d, 21f and 21h, i.e., in the y axis direction compared to an aspect where the thermally conductive member 20 does not include the recessed parts 21b, 21d, 21f and 21h (see a lower stage in Fig. 2A). Consequently, it is possible to more densely arrange the batteries 10 in the case 30.

As illustrated in Fig. 2A, the five recessed parts and the four protrusion parts are formed along the x axis direction and between the one end part 20a on the minus x axis side and the other end part 20b on the plus x axis side on the principal surface 22 on a plus y axis side of the thermally conductive member 20. These recessed parts and protrusion parts are aligned and arranged in order of the recessed part 22a, a protrusion part 22b, the recessed part 22c, a protrusion part 22d, the recessed part 22e, a protrusion part 22f, the recessed part 22g, a protrusion part 22h and the recessed part 22i from the one end part 20a side. Each of the recessed part 22a, the recessed part 22c, the recessed part 22e, the recessed part 22g and the recessed part 22i of the principal surface 22 is formed at a position at which each of the protrusion part 21a, the protrusion part 21c, the protrusion part 21e, the protrusion part 21g and the protrusion part 21i of the principal surface 21 is formed. Each of the protrusion part 22b, the protrusion part 22d, the protrusion part 22f and the protrusion part 22h of the principal surface 22 is formed at a position at which each of the recessed part 21b, the recessed part 21d, the recessed part 21f and the recessed part 21h of the principal surface 21 is formed. As a result, the recessed parts 21b, 21d, 21f and 21h are positioned between the two neighboring recessed parts of the other recessed parts 22a, 22c, 22e, 22g and 22i in the x axis direction in which the other recessed parts 22a, 22c, 22e, 22g and 22i are aligned.

The batteries 10 of the battery row B2 are fixed to the principal surface 22. The five batteries 10 of the battery row B2 are respectively fixed to the recessed part 22a, the recessed part 22c, the recessed part 22e, the recessed part 22g and the recessed part 22i. The principal surface 22 on the plus y axis side of the thermally conductive member 20 is also referred to as an "other principal surface". The curvatures of recessed surfaces of the recessed parts 22a, 22c, 22e, 22g and 22i substantially match with curvatures of outer circumferential surfaces of the batteries 10 of the columnar shapes.

According to this aspect, it is possible to reduce a dimension of a range W2 occupied by the thermally conductive member 20 and the batteries 10 in contact with the both sides of the thermally conductive member 20 in the y axis direction vertical to the x axis direction in which the plurality of recessed parts 22a, 22c, 22e, 22g and 22i are aligned while arranging the batteries 10 on the both sides of the thermally conductive member 20 (see the lower stage in Fig. 2A). Consequently, it is possible to more densely arrange the batteries 10 in the case 30.

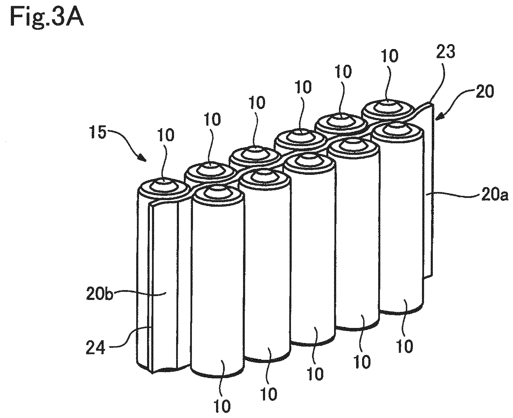

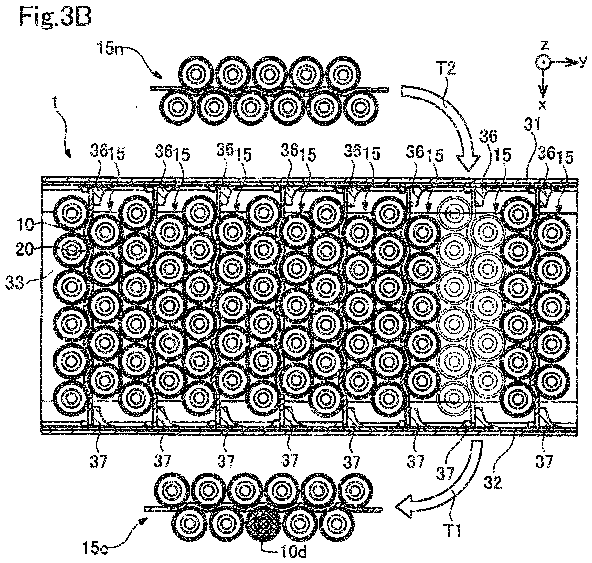

Fig. 3A is a perspective view of a battery module 15 included in the battery pack 1. Fig. 3B is an explanatory view illustrating processing of exchanging the battery modules 15 in the battery pack 1. According to the present embodiment, the one thermally conductive member 20 and the 11 batteries 10 fixed to this one thermally conductive member 20, i.e., the one battery row B1 and the one battery row B2 constitute the one battery module 15 illustrated in Fig. 3A. As illustrated in Fig. 3B, the battery pack 1 includes the eight battery modules 15.

According to the present embodiment, as illustrated in Fig. 3B, when a failure occurs in one battery 10d, a battery module 15o including the battery 10d which has caused this failure is detached (an outlined arrow T1 in Fig. 3B). Subsequently, a new battery module 15n is attached to a place at which the battery module 15o has been detached (an outlined arrow T2 in Fig. 3B).

The case 30 houses the plurality of batteries 10 and the plurality of thermally conductive members 20 inside (see Fig. 1). The case 30 is formed by, for example, metal having high thermal conductivity. The case 30 includes a plurality of wall parts 31, 32, 33 and 34 which form a housing space 30a for housing the plurality of batteries 10 and the plurality of thermally conductive members 20, a plurality of grip parts 36, and a plurality of grip parts 37. Note that Fig. 1 illustrates the battery pack 1 in a state where the wall part 34 has been detached from the case 30 for ease of understanding of the technique. The case 30 is connected with an unillustrated external heat dissipation device. The case 30 transfers heat generated by the batteries 10 to this heat dissipation device.

As illustrated in Fig. 1, the wall part 31 and the wall part 32 are arranged at positions facing each other (see an upper stage center part and a lower stage center part in Fig. 1). The wall part 31 and the wall part 32 form the housing space 30a in which the plurality of batteries 10 and the plurality of thermally conductive members 20 are arranged. A surface on the housing space 30a side of the wall part 31 is provided with the plurality of grip parts 36 (see an upper stage in Fig. 1 and an upper stage in Fig. 2). A surface on the housing space 30a side of the wall part 32 is provided with the plurality of grip parts 37 (see a lower stage in Fig. 1 and a lower stage in Fig. 2). Details of configurations of the grip parts 36 and 37 will be described later. The wall part 31 and the wall part 32 are also referred to as "a pair of side surface parts".

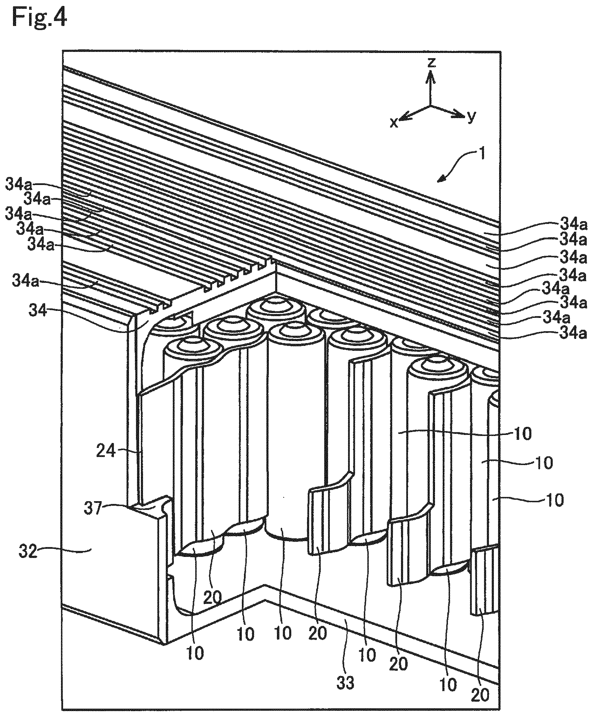

Fig. 4 is a perspective view of the battery pack 1 according to the present embodiment from which part of the components of the battery pack 1 have been removed. The wall part 33 is connected with an end part on a minus z axis direction side of the wall part 31, and an end part on the minus z axis direction side of the wall part 32 (see a lower stage center part in Fig. 4). The wall part 33 corresponds to a bottom part of the case 30. As illustrated in Fig. 4, the plurality of batteries 10 housed in the housing space 30a is placed on the wall part 33. The wall part 34 is connected with an end part on a plus z axis direction side of the wall part 31, and an end part on the plus z axis direction side of the wall part 32. The wall part 34 is arranged at a position which faces the wall part 33. As illustrated in Fig. 4, a plurality of fins 34a are formed in an outer wall surface of the wall part 34. Consequently, the case 30 can dissipate heat to the above-described heat dissipation device and, in addition, efficiently dissipate heat generated by the batteries 10 to an outside by using the fins 34a.

As illustrated in the upper stage in Fig. 2A, the grip part 36 is arranged on a surface on the housing space 30a side of the wall part 31. The grip part 36 includes two slit formation parts 36a and 36b. The two slit formation parts 36a and 36b each protrude from the surface on the housing space 30a side of the wall part 31 to a plus x axis direction. As illustrated in Fig. 2B, the two slit formation parts 36a and 36b are arranged so as to form a gap of a certain interval. On each of the two slit formation parts 36a and 36b, inner wall surfaces 36c and 36d of planar shapes which face each other in the y axis direction are formed. A space between the inner wall surface 36c and the inner wall surface 36d is a slit S which penetrates the grip part 36 in the z axis direction.

The grip part 36 is not in contact with an end surface 23 of the thermally conductive member 20 in a minus x axis direction. The wall part 31 which supports the grip part 36 is not in contact with the end surface 23 of the thermally conductive member 20, either. The grip part 36 regulates displacement of each of the surfaces 21 and 22 of the thermally conductive member 20 in the y axis direction vertical to each of the surfaces 21 and 22 which are connected with the end surface 23 and positioned on sides opposite to each other. That is, the surfaces 21 and 22 of the thermally conductive member 20 are positioned within a range defined by the grip part 36 in the y axis direction. The grip part 36 is in contact with at least one of the two surfaces 21 and 22, and thereby holds the end part 20a of the thermally conductive member 20. According to the present embodiment, the grip part 36 is substantially in contact with the two surfaces 21 and 22, and thereby determines the position of the end part 20a of the thermally conductive member 20.

According to this configuration, it is possible to transfer heat generated by the batteries 10 to the case 30 through the thermally conductive member 20 which is in contact with the batteries 10, and the grip part 36 which is in contact with at least one of the two surfaces 21 and 22 of the thermally conductive member 20. Furthermore, even in a case where the position of the end surface 23 of the thermally conductive member 20 with respect to the grip part 36 is displaced from a designed position due to a manufacturing error of one or both of the thermally conductive member 20 and the case 30, it is possible to transfer the heat generated by the batteries to the case 30.

More specifically, as illustrated in Fig. 2B, the inner wall surface 36c and the inner wall surface 36d of the grip part 36 sandwich the one end part 20a of the thermally conductive member 20, and thereby grip the one end part 20a of the thermally conductive member 20. As illustrated in Fig. 2B, the one end part 20a of the thermally conductive member 20 is gripped by the grip part 36 in the slit S.

In this state, at least one of the two facing surfaces 36c and 36d of the grip part 36 which define the slit S is in contact with at least one of the two surfaces 21 and 22 of the thermally conductive member 20 positioned on the sides opposite to each other. The wall part 31 is not in contact with the end surface 23 of the thermally conductive member 20 via a surface 36e which connects the two facing surfaces 36c and 36d in the slit S.

A gap between the one end part 20a of the thermally conductive member 20 and the grip part 36 is filled by a thermally conductive grease 38. As a result, the surface 36e which connects the two facing surfaces 36c and 36d in the slit S and the end surface 23 of the thermally conductive member 20 are connected by the thermally conductive grease 38 (see an upper stage center part in Fig. 2B).

Accordingly, it is possible to transfer heat from the end surface 23 of the thermally conductive member 20 to the surface 36e which connects the two facing surfaces 36c and 36d in the slit S through the thermally conductive grease 38. Consequently, even in a case where the position of the end surface 23 of the thermally conductive member 20 with respect to the grip part 36 is displaced due to a manufacturing error of one or both of the thermally conductive member 20 and the case 30 or an assembly error of the thermally conductive member 20 and the case 30, it is possible to transfer heat from the end surface 23 of the thermally conductive member 20 to the grip part 36.

According to a preferred embodiment, sizes of the two slit formation parts 36a and 36b in the x axis direction are different to prevent an interference with the batteries 10 fixed to the thermally conductive member 20. More specifically, the dimension of the slit formation part 36b in the x axis direction is smaller than the dimension of the slit formation part 36a in the x axis direction. As a result, an interference between the battery 10 at an end of the battery row B1 and the slit formation part 36b is prevented.

Note that Fig. 2B illustrates the enlarged width of the slit S compared to the width of the one end part 20a of the thermally conductive member 20 to clarify a positional relationship between the principal surface 21 of the thermally conductive member 20, the inner wall surface 36d of the slit formation part 36b and the thermally conductive grease 38 in the slit S. However, the inner wall surfaces 36c and 36d are actually substantially in contact with the principal surfaces 21 and 22 of the thermally conductive member 20, respectively. The thermally conductive grease 38 fills minute gaps of various portions between the inner wall surface 36d and the principal surface 21. As a result, the thermally conductive grease 38 functions to increase an area of a part at which heat is transferred between the inner wall surface 36d and the principal surface 21.

The thermally conductive member 20 and the grip part 36 are configured such that the thermally conductive member 20 can be detached from the grip part 36 by sliding in the slit S the thermally conductive member 20 with respect to the grip part 36.

According to this configuration, when the thermally conductive member 20 and the plurality of batteries 10 in contact with the thermally conductive member 20 cause abnormalities, the abnormalities can be dealt with as follows. That is, it is possible to easily detach the thermally conductive member 20 and the plurality of batteries 10 in contact with the thermally conductive member 20 from the case 30 to exchange with the new thermally conductive member 20 and the plurality of new batteries 10 in contact with the new thermally conductive member 20 (see Fig. 3B).

The grip part 37 is arranged on a surface on the housing space 30a side of the wall part 32 (see a lower stage in Fig. 2A). The grip part 37 is provided in a shape symmetrical to that of the grip part 36 around an axis parallel to the y axis direction. As a result, the grip part 37 exhibits the same function as that of the grip part 36.

Accordingly, it is possible to efficiently transfer heat of the batteries 10 to the case 30 through the both end parts 20a and 20b of the thermally conductive member 20. Furthermore, even in a case where the positions of the end surfaces 23 and 24 at the both ends of the thermally conductive member 20 in the x axis direction with respect to the grip part 36 are displaced due to a manufacturing error of one or both of the thermally conductive member 20 and the case 30 or an assembly error of the thermally conductive member 20 and the case 30, it is possible to transfer heat generated by the batteries 10 to the case 30.

More specifically, the grip part 37 includes two slit formation parts 37a and 37b. The two slit formation parts 37a and 37b each protrude from the surface on the housing space 30a side of the wall part 32 to the minus x axis direction. The two slit formation parts 37a and 37b are arranged so as to form a gap of a certain interval substantially equal to the gap of the grip part 36. On each of the two slit formation parts 37a and 37b, inner wall surfaces of planar shapes which face each other in the y axis direction are formed. A space between these inner wall surfaces is a slit which penetrates the grip part 36 in the z axis direction.

The grip part 37 is not in contact with the end surface 24 of the thermally conductive member 20 in the plus x axis direction. The wall part 32 which supports the grip part 37 is not in contact with the end surface 24 of the thermally conductive member 20, either. The grip part 37 regulates displacement of each of the surfaces 21 and 22 of the thermally conductive member 20 in the y axis direction vertical to each of the surfaces 21 and 22 which are connected with the end surface 24 and positioned on the sides opposite to each other, is in contact with at least one of the two surfaces, and thereby holds the end part 20b of the thermally conductive member 20.

More specifically, as illustrated in Fig. 2A, the two inner wall surfaces respectively formed on the two slit formation parts 37a and 37b of the grip part 37 sandwich the other end part 20b of the thermally conductive member 20, and thereby grip the other end part 20b of the thermally conductive member 20. According to the present embodiment, a gap between the other end part 20b of the thermally conductive member 20 gripped by the grip part 37, and the grip part 37 in the slit formed in the grip part 37 is filled by the same thermally conductive grease as that of the grip part 36 (see Fig. 2B). Similar to the grip part 36, sizes of the two slit formation parts 37a and 37b in the x axis direction are different to prevent an interference with the batteries 10 fixed to thermally conductive member 20. More specifically, the dimension of the slit formation part 37b in the x axis direction is smaller than the dimension of the slit formation part 37a in the x axis direction. As a result, an interference between the battery 10 at an end of the battery row B1 and the slit formation part 37b is prevented.

The both end parts 20a and 20b are inserted in the respective slits of the two grip parts 36 and 37 such that each of the eight battery modules 15 included in the battery pack 1 is gripped by the grip parts 36 and 37 (see Fig. 3B). By detaching the wall part 34 from the case 30 and then sliding the arbitrary battery module 15 in the plus z axis direction with respect to the grip parts 36 and 37, the arbitrary battery module 15 can be detached from the case 30 (see the arrow T1 in Fig. 3B). Then, by sliding the new battery module 15 in the minus z axis direction with respect to the grip part 36 and 37, this new battery module 15 is attached to the case 30 (see the arrow T2 in Fig. 3B). Consequently, it is possible to easily exchange the battery module 15 as described above.

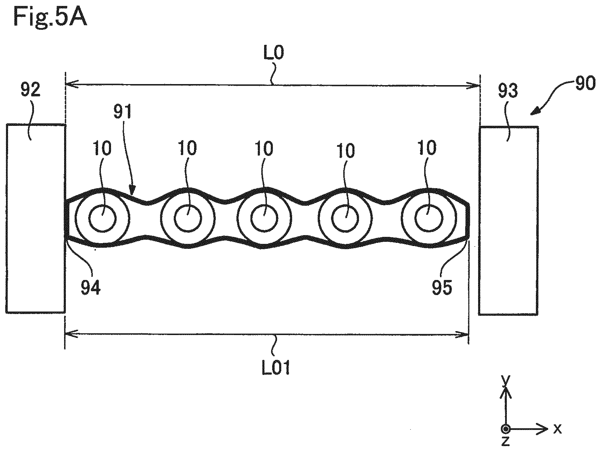

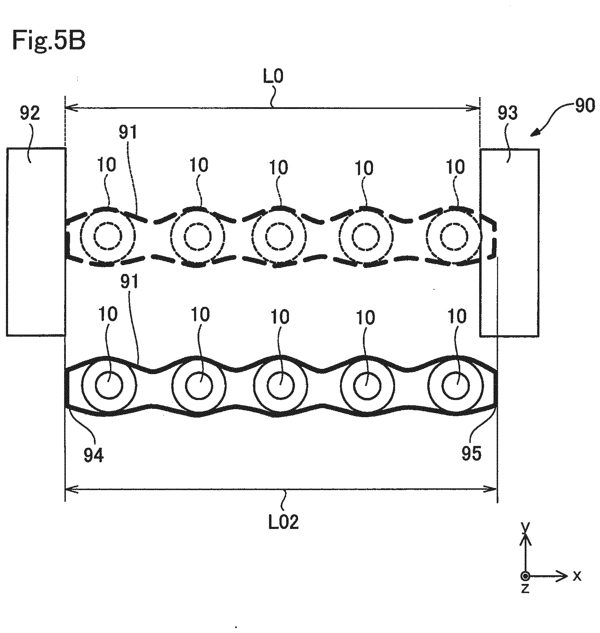

Next, an effect of the battery pack 1 according to the present embodiment will be described. First, an issue of a battery pack 90 according to a comparative example will be described with reference to Figs. 5A and 5B.

Figs. 5A and 5B are explanatory views for explaining the issue of the battery pack 90 according to the comparative example. In the battery pack 90 according to the comparative example illustrated in Fig. 5A, the plurality of batteries 10 are aligned in a row and arranged between a pair of wall parts 92 and 93 of a case of the battery pack 90. Thermally conductive members 91 in contact with the plurality of these batteries 10 are arranged on both sides of the plurality of batteries 10, and are formed to surround the batteries 10. The thermally conductive member 91 is arranged between the pair of wall parts 92 and 93. In the battery pack 90 according to the comparative example, both end parts of the thermally conductive member 91 are respectively fixed by, for example, welding to the wall parts 92 and 93.

An actual size of the thermally conductive member 91 is determined at a manufacturing stage. The length of the thermally conductive member 91 in a direction in which the plurality of batteries 10 are aligned may differ per individual thermally conductive member 91 due to a manufacturing error in some cases. Hence, the plurality of thermally conductive members 91 include the relatively short thermally conductive members 91 illustrated in Fig. 5A, and the relatively long thermally conductive members 91 illustrated in Fig. 5B. In a case where, for example, a length L01 of the thermally conductive member 91 in a direction in which the batteries 10 in contact with the thermally conductive member 91 are aligned is shorter than a distance L0 between the pair of wall parts 92 and 93 as illustrated in Fig. 5A, while one end part 94 of the thermally conductive member 91 can be connected with the wall part 92, an other end part 95 cannot be connected with the wall part 93. Consequently, heat of the batteries 10 on the end part 95 side of the thermally conductive member 91 is hardly dissipated to an outside through the case in the manufactured battery pack 90.

Furthermore, in a case where a length L02 of the thermally conductive member 91 in the direction in which the batteries 10 in contact with the thermally conductive member 91 are aligned is longer than the distance L0 between the pair of wall parts 92 and 93 as illustrated in Fig. 5B, the thermally conductive member 91 to which the batteries 10 are fixed cannot be arrange between the pair of wall parts 92 and 93 (see the thermally conductive member 91 indicated by a broken line in Fig. 5B). Consequently, it is necessary to manufacture the thermally conductive member 91 such that the length of the thermally conductive member 91 in the direction in which the batteries 10 are aligned is not longer than the distance L0 between the pair of wall parts 92 and 93. On the other hand, as described with reference to Fig. 5A, in the case where the length of the thermally conductive member 91 is shorter than the distance L0 between the pair of wall parts 92 and 93, one of the two end parts 94 and 95 cannot be connected with the wall parts 92 and 93.

Therefore, cooling efficiency differs between the plurality of thermally conductive members 91 depending on the lengths of the thermally conductive members 91. As a result, the cooling efficiency varies per thermally conductive member 91, and the cooling efficiency of the overall battery pack 90 lowers. To prevent the variation of the cooling efficiency, the lengths of the thermally conductive members 91 need to be accurately managed to match with or become slightly shorter than the distance L0 between the pair of wall parts 92 and 93 which is an upper limit. That is, it is necessary to set a small manufacturing tolerance for the thermally conductive members 91. Therefore, manufacturing cost of the battery pack 90 increases.

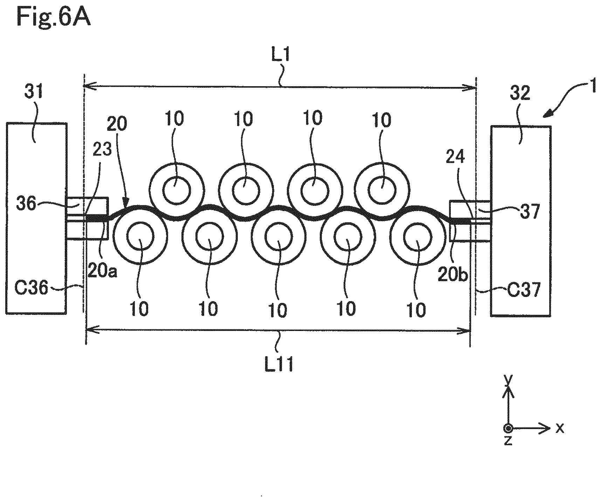

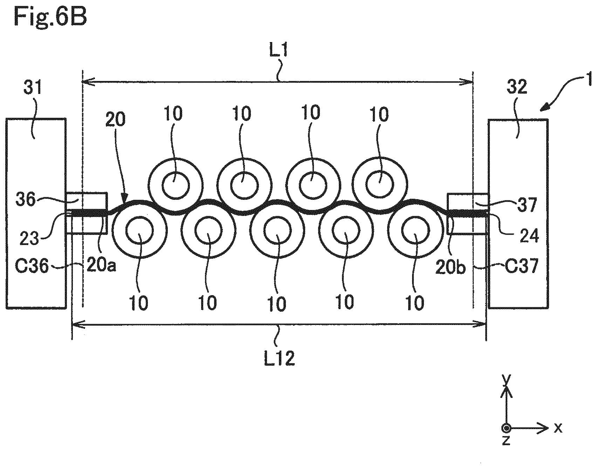

Figs. 6A and 6B are explanatory views for explaining the effect of the battery pack 1 according to the present embodiment. As described above, according to the battery pack 1 according to the present embodiment, the pair of wall parts 31 and 32 are provided with the grip parts 36 and 37, respectively, which grip the two end parts 20a and 20b of the thermally conductive member 20, respectively (see Figs. 1 and 2A). In, for example, a manufacturing process of the thermally conductive member 20, a reference dimension of the length of the thermally conductive member 20 can be set to the distance L1 between a center line C36 of the grip part 36 and a center line C37 of the grip part 37 (see an upper stage in Fig. 6A). Note that the center line C36 is a line which indicates a center position of the slit S of the grip part 36 in the x axis direction. The center line C37 is a line which indicates a center position of the slit of the grip part 37 in the x axis direction. According to this aspect, even in a case where a length L11 of the thermally conductive member 20 in a direction in which the batteries 10 in contact with the thermally conductive member 20 are aligned is shorter than the length L1 as illustrated in Fig. 6A, the thermally conductive member 20 can be held by the grip parts 36 and 37. Furthermore, even in a case where a length L12 of the thermally conductive member 20 in the direction in which the batteries 10 in contact with the thermally conductive member 20 are aligned is longer than the length L1 as illustrated in Fig. 6B, the thermally conductive member 20 can be arranged in the case 30. Consequently, the manufacturing tolerance of the thermally conductive member 20 can be made greater than the manufacturing tolerance of the thermally conductive member 91 according to the comparative example. Consequently, the manufacturing cost of the battery pack 1 is reduced. Furthermore, in the both cases, the two end parts 20a and 20b of the thermally conductive member 20 are gripped by the two grip parts 36 and 37, respectively, so that heat generated by the batteries 10 transfers to the case 30 through the thermally conductive member 20 (see Figs. 5A and 6A). Consequently, the cooling efficiency varies becomes less between the plurality of thermally conductive members 20, so that it is possible to improve the cooling efficiency.

According to the above-described battery pack 1 according to the present embodiment, the thermally conductive members 20 to which the plurality of batteries 10 are fixed are gripped by the grip parts 36 and 37 provided to the case 30. Consequently, the heat generated by the batteries 10 transfers to the case 30 through the thermally conductive members 20, and thereby is dissipated from the case 30 to the outside of the battery pack 1. The grip parts 36 and 37 grip the thermally conductive members 20 by sandwiching the two end parts 20a and 20b of the thermally conductive members 20. Consequently, even in a case where the positions of the two end parts 20a and 20b of the thermally conductive members 20 with respect to the grip parts 36 and 37 are displaced due to variations of the lengths of the thermally conductive member 20, the grip parts 36 and 37 can grip the thermally conductive members 20. Consequently, even in a case where the manufacturing tolerance of the length is made great compared to the comparative example where the manufacturing tolerance of the length of the thermally conductive members needs to be strictly managed to connect the both end parts with the case, it is possible to transfer the heat generated by the batteries 10 to the case 30. Consequently, it is possible to improve the cooling efficiency of the batteries 10 while reducing the manufacturing cost of the battery pack 1.

Furthermore, according to the battery pack 1 according to the present embodiment, the two end parts 20a and 20b of the thermally conductive member 20 are gripped by the grip parts 36 and 37, respectively, which are provided to the pair of wall parts 31 and 32. Consequently, compared to the thermally conductive member whose one end part is fixed and whose other end part is fixed to the case, it is possible to make the manufacturing tolerance of the thermally conductive member 20 greater. Consequently, it is possible to further reduce the manufacturing cost of the battery pack 1.

Furthermore, in the battery pack 1 according to the present embodiment, the batteries 10 have the columnar shapes. The nine batteries 10 are in contact with the recessed parts 21b, 21d, 21f, 21h, 22a, 22c, 22e, 22g and 22i of the thermally conductive member 20 having the plate shape. More specifically, part of each of the nine batteries 10 is positioned in the recessed parts 21b, 21d, 21f, 21h, 22a, 22c, 22e, 22g and 22i of the thermally conductive member 20. Consequently, a volume of a minimum cuboid surrounding a space occupied by the one thermally conductive member 20 and the plurality of batteries 10 in contact with this thermally conductive member 20 is smaller than a volume of a minimum cuboid surrounding a space occupied by one thermally conductive member and a plurality of batteries in contact with this one thermally conductive member in a case where the batteries of cylindrical shapes are in contact with principal surfaces of the thermally conductive member of flat plate shapes. Consequently, it is possible to house the more batteries 10 inside the case 30. Consequently, it is possible to improve a packing density of the batteries 10 while improving the cooling efficiency of the batteries 10.

Furthermore, according to the battery pack 1 according to the present embodiment, each of the recessed part 22a, the recessed part 22c, the recessed part 22e, the recessed part 22g and the recessed part 22i of the principal surface 22 of the thermally conductive member 20 is formed at a position at which each of the protrusion part 21a, the protrusion part 21c, the protrusion part 21e, the protrusion part 21g and the protrusion part 21i of the principal surface 21 is formed. The batteries 10 arranged on the principal surface 21 side of the thermally conductive member 20 are fixed to the recessed parts 21b, 21d, 21f and 21h of the principal surface 21. Furthermore, the batteries 10 arranged on the principal surface 22 side of the thermally conductive member 20 are fixed to the recessed parts 22a, 22c, 22e, 22g and 22i of the principal surface 22. More specifically, the nine batteries 10 are arranged in a zig-zag pattern along a longitudinal direction of the thermally conductive member 20 while being in contact with the recessed parts 21b, 21d, 21f, 21h, 22a, 22c, 22e, 22g and 22i of the thermally conductive member 20. Consequently, according to the battery pack 1, the volume of the minimum cuboid surrounding the space occupied by the one thermally conductive member and the plurality of batteries in contact with this one thermally conductive member is much smaller than the volume of the minimum cuboid surrounding the space occupied by the one thermally conductive member and the plurality of batteries in contact with this one thermally conductive member in a case where the batteries are in contact with each of the two principal surfaces included in the thermally conductive member of the flat plate shape. Consequently, it is possible to house the much more batteries 10 inside the case 30. Consequently, it is possible to improve the packing density of the batteries 10 while improving the cooling efficiency of the batteries 10.

Furthermore, according to the battery pack 1 according to the present embodiment, the battery pack 1 includes the plurality of battery modules 15. The one battery module 15 is constituted by the one thermally conductive member 20, and the plurality of batteries 10 fixed to the one thermally conductive member 20. The grip parts 36 and 37 include the slits in which one of the two end parts 20a and 20b of the thermally conductive member 20 included in the battery module 15 can be inserted, and are configured to enable attachment and detachment of the battery module 15 by sliding the battery module 15 with respect to the slit. Consequently, it is possible to return the battery pack 1 to a normal state by exchanging only the battery module 15 which has caused an abnormality instead of the whole battery pack 1 when the one battery module 15 causes the abnormality. Furthermore, by sliding the battery module 15 with respect to the slit, the battery module 15 can be attached and detached, so that it is possible to easily exchange the battery module 15.

Furthermore, according to the battery pack 1 according to the present embodiment, the gaps between the two end parts 20a and 20b of the thermally conductive member 20 gripped by the grip parts 36 and 37, and the grip parts 36 and 37 are filled by the thermally conductive grease 38. Consequently, even when relatively short length of the thermally conductive member 20 creates the gaps between the end parts 20a and 20b of the thermally conductive member 20 and the grip parts 36 and 37 , the thermally conductive grease 38 which fills the gaps can transfer heat from the thermally conductive member 20 to the case 30 through the grip parts 36 and 37. Consequently, it is possible to further improve the cooling efficiency of the batteries 10.

The grip part 36 , the part of the wall part 31 which supports the grip part 36, and the part of the wall part 31 which forms the inner wall surface 36e of the slit S in the present embodiment are also referred to as a "holding part". The grip part 37, the part of the wall part 32 which supports the grip part 37, and the part of the wall part 32 which forms the inner wall surface of the slit of the grip part 37 are also referred to as an "other holding part". The thermally conductive grease 38 is also referred to as a "grease".

### B. Second Embodiment

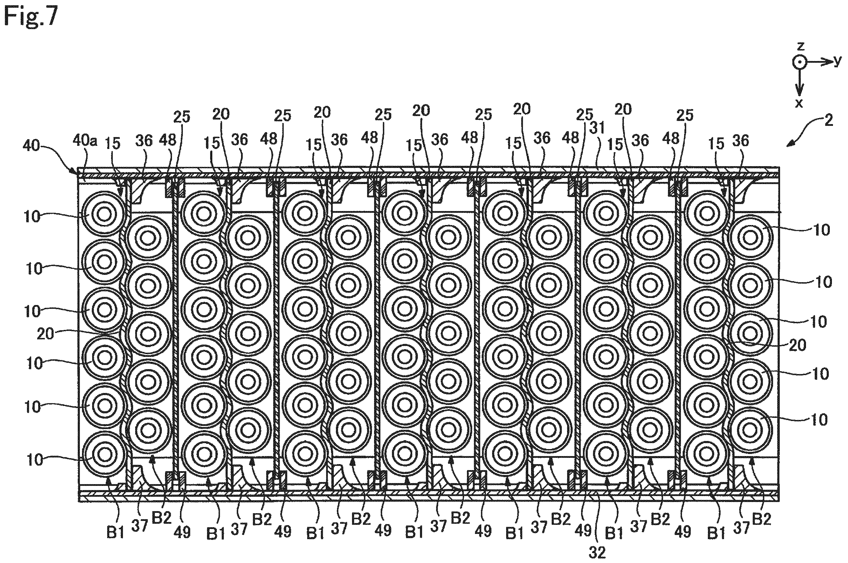

Fig. 7 is a schematic view illustrating a schematic configuration of a battery pack 2 according to a second embodiment. The battery pack 2 according to the second embodiment differs from the battery pack 1 according to the first embodiment illustrated in Fig. 1 in including heat shielding members. Other points of the battery pack 2 according to the second embodiment are the same as those of the battery pack 1 according to the first embodiment.

The battery pack 2 according to the present embodiment includes the plurality of batteries 10, the thermally conductive members 20, heat shielding members 25 and a case 40.

The heat shielding member 25 is a member of a plate shape arranged between the neighboring battery modules 15 among the plurality of battery modules 15 arranged in the case 40. The heat shielding member 25 has low thermal conductivity, and is formed by a material having fire retardancy. More specifically, the heat shielding member 25 is made of a material having lower thermal conductivity than that of the material of the thermally conductive member 20. The thermal conductivity of the material of the heat shielding member 25 is lower than thermal conductivity of the material of the case 30 and thermal conductivity of the thermally conductive grease 38. According to the present embodiment, the battery pack 2 includes the six heat shielding members 25.

That is, the heat shielding member 25 is arranged between a combination of the thermally conductive member 20 and the plurality of batteries 10 which constitute the certain battery module 15, and a combination of the another thermally conductive member 20 and the plurality of other batteries 10 which constitute the another battery module 15.

According to this configuration, it is possible to prevent heat from being transferred between the plurality of batteries 10 which transfer heat to each other through the thermally conductive member 20, and the plurality of other batteries 10 which transfer heat to each other through the another thermally conductive member 20. As a result, when the one or more batteries of the plurality of batteries 10 cause abnormal heating, it is possible to reduce a probability that this heat causes a negative influence on the plurality of other batteries 10. Furthermore, when the one or more batteries of the plurality of other batteries 10 cause abnormal heating, it is possible to reduce a probability that this heat causes a negative influence on the plurality of batteries 10.

The case 40 includes the plurality of wall parts 31, 32, 33 and 34 which form a housing space 40a which houses the plurality of batteries 10, the plurality of thermally conductive members 20 and the plurality of heat shielding members 25, the plurality of grip parts 36 and the plurality of grip parts 37 which respectively grip the thermally conductive members 20, and the plurality of grip parts 48 and the plurality of grip parts 49 which respectively grip the heat shielding members 25.

The grip part 48 is arranged between the neighboring grip parts 36 on the surface on the housing space 40a side of the wall part 31 (see an upper stage in Fig. 7). The grip part 48 protrudes from the surface on the housing space 30a of the wall part 31 side to the plus x axis direction. The grip part 48 includes a slit in which an end part of the heat shielding member 25 can be inserted. The grip part 48 grips the end part of the heat shielding member 25 when the end part of the heat shielding member 25 is inserted therein.

The grip part 49 is arranged between the neighboring grip parts 37 on the surface on the housing space 40a side of the wall part 32 (see a lower stage in Fig. 7). The grip part 49 protrudes from the surface on the housing space 30a side of the wall part 32 to the minus x axis direction. The grip part 49 includes a slit in which an end part of the heat shielding member 25 can be inserted. The grip part 49 grips the end part of the heat shielding member 25 when the end part of the heat shielding member 25 is inserted therein.

The two end parts of the heat shielding member 25 are respectively held in the slits included in the two grip parts 48 and 49, and thereby supported. As a result, the heat shielding member 25 shields between the neighboring battery module 15 and battery module 15. The heat shielding member 25 is configured to be exchangeable by being slid with respect to the grip parts 48 and 49.

According to the above-described battery pack 2 according to the present embodiment, the battery pack 2 includes the plurality of battery modules 15 which are each constituted by the one thermally conductive member 20 and the plurality of batteries 10 in contact with the one thermally conductive member 20, and the heat shielding members 25 are arranged between the neighboring battery modules 15. Consequently, it is possible to prevent heat exchange between the neighboring battery modules 15, and prevent an abnormality of the one battery module 15 from influencing the neighboring battery module 15 of the one battery module 15 when the abnormality occurs in an external appearance of the battery 10 included in the one battery module 15. Consequently, it is possible to prevent the abnormality of the one battery module 15 from influencing the overall battery pack 2.

### C. Modified Example of Present Embodiment

The present disclosure is not limited to the above embodiments, can be carried out as various aspects without departing from the scope of the appended claims, and can be also modified as follows, for example.

### [Modified Example 1]

According to the above-described embodiments, the batteries 10 are fixed to the thermally conductive members 20. However, the batteries do not necessarily need to be fixed to the thermally conductive members, and only need to be in contact with the thermally conductive members. The batteries and the thermally conductive members are in contact, so that it is possible to transfer heat generated by the batteries to the case through the thermally conductive members. Consequently, it is possible to improve the cooling efficiency.

### [Modified Example 2]

According to the above-described embodiments, the grip parts 36 and 37 are provided to the pairs of the wall parts 31 and 32 of the case 30, respectively. However, the grip parts may be provided to one of the wall parts. In a case where the one grip part can grip one end part of the thermally conductive member, it is possible to transfer heat of the batteries to the case while making the manufacturing tolerance of the thermally conductive member greater.

### [Modified Example 3]

According to the above-described embodiments, the plurality of recessed and protrusion parts are formed on the principal surfaces 21 and 22 of the thermally conductive members 20, and the batteries 10 are fixed to the recessed parts. However, the shape of the thermally conductive member 20 is not limited to this. The thermally conductive member 20 may have a flat plate shape. Furthermore, part of the batteries 10 of the plurality of batteries 10 may be in contact with and fixed to the recessed parts of the thermally conductive member, and part of the other batteries 10 may be in contact with and fixed to flat plate parts of the thermally conductive member.

### [Modified Example 4]

According to the above-described embodiments, each of the recessed part 22a, the recessed part 22c, the recessed part 22e, the recessed part 22g and the recessed part 22i of the principal surface 22 is formed at a position at which each of the protrusion part 21a, the protrusion part 21c, the protrusion part 21e, the protrusion part 21g and the protrusion part 21i of the principal surface 21 is formed. In other words, the thermally conductive member 20 is a member of a plate shape whose thickness is substantially uniform, and is corrugated in the y axis direction. However, the shape of the thermally conductive member 20 is not limited to this. Furthermore, the batteries 10 are arranged on the both sides of the thermally conductive member 20, yet may be arranged on one side.

### [Modified Example 5]

According to the above-described embodiments, the battery pack 1 includes the plurality of battery modules 15. By sliding the individual battery module 15 in the z axis direction with respect to the grip parts 36 and 37, it is possible to attach and detach the battery module 15 to and from the case 30. However, the battery modules 15 may be housed in the case in a mode that the battery modules 15 are fixed to the case by bolts or nuts, that is, the battery modules 15 cannot be detached from the case only by sliding the battery modules 15.

### [Modified Example 7]

According to the above-described embodiments, the gap between the one end part 20a of the thermally conductive member 20 gripped by the grip part 36, and the grip part 36 is filled by grease 38. However, a material which fills the gap between the end part of the thermally conductive member 20 and the grip part is not limited to this. A gap between an external surface of the end part of the thermally conductive member and the grip part may be filled by a thermally conductive grease 38. Other alternatives that are not part of the present invention may include an adhesive material, such that the end part of the thermally conductive member and the grip part may be fixed. Furthermore, there may not be a material which fills the gap.

Although the present embodiments have been described above to help understand the present invention, changes and improvements can be made without departing from the scope of the appended claims.

### REFERENCE SIGNS LIST

- 1: BATTERY PACK
- 2: BATTERY PACK
- 10: BATTERY
- 10d: BATTERY
- 15: BATTERY MODULE
- 15n: BATTERY MODULE
- 15o: BATTERY MODULE
- 20: THERMALLY CONDUCTIVE MEMBER
- 20a: END PART
- 20b: END PART
- 21: PRINCIPAL SURFACE
- 21a: PROTRUSION PART
- 21b: RECESSED PART
- 21c: PROTRUSION PART
- 21d: RECESSED PART
- 21e: PROTRUSION PART
- 21f: RECESSED PART
- 21g: PROTRUSION PART
- 21h: RECESSED PART
- 21i: PROTRUSION PART
- 22: PRINCIPAL SURFACE
- 22a: RECESSED PART
- 22b: PROTRUSION PART
- 22c: RECESSED PART
- 22d: PROTRUSION PART
- 22e: RECESSED PART
- 22f: PROTRUSION PART
- 22g: RECESSED PART
- 22h: PROTRUSION PART
- 22i: RECESSED PART
- 23: END SURFACE
- 24: END SURFACE
- 25: HEAT SHIELDING MEMBER
- 30: CASE
- 30a: HOUSING SPACE
- 31: WALL PART
- 32: WALL PART
- 33: WALL PART
- 34: WALL PART
- 34a: FIN
- 36: GRIP PART
- 36a: SLIT FORMATION PART
- 36b: SLIT FORMATION PART
- 36c: INNER WALL SURFACE
- 36d: INNER WALL SURFACE
- 36e: SURFACE
- 37: GRIP PART
- 37a: SLIT FORMATION PART
- 37b: SLIT FORMATION PART
- 38: THERMALLY CONDUCTIVE GREASE
- 40: CASE
- 40a: HOUSING SPACE
- 48: GRIP PART
- 49: GRIP PART
- 90: BATTERY PACK
- 91: THERMALLY CONDUCTIVE MEMBER
- 92: WALL PART
- 93: WALL PART
- 94: END PART
- 95: END PART
- A: RANGE ILLUSTRATED IN FIG. 2B
- B1: BATTERY ROW
- B2: BATTERY ROW
- C36: CENTER LINE
- C37: CENTER LINE
- L0: DISTANCE BETWEEN WALL PARTS 92 AND 93
- L01: LENGTH OF THERMALLY CONDUCTIVE MEMBER 91
- L02: LENGTH OF THERMALLY CONDUCTIVE MEMBER 91
- L1: DISTANCE BETWEEN CENTER LINE C36 OF GRIP PART 36 AND CENTER LINE C37 OF GRIP PART 37
- L11: LENGTH OF THERMALLY CONDUCTIVE MEMBER 20
- L12: LENGTH OF THERMALLY CONDUCTIVE MEMBER 20
- S: SLIT
- T1: ARROW INDICATING DETACHMENT OF BATTERY MODULE 15o
- T2: ARROW INDICATING ATTACHMENT OF BATTERY MODULE 15n
- W1: RANGE OCCUPIED BY THERMALLY CONDUCTIVE MEMBER 20 AND BATTERIES 10
- W2: RANGE OCCUPIED BY THERMALLY CONDUCTIVE MEMBER 20 AND BATTERIES 10 IN CONTACT WITH BOTH SIDES OF THERMALLY CONDUCTIVE MEMBER 20

## Claims

1. A battery pack (1) comprising:
a plurality of batteries (10);
a thermally conductive plate (20) having two opposite principal surfaces (21, 22) connected by side surfaces (23, 24), said thermally conductive plate (20) being in contact with the plurality of batteries (10); and
a case (30) which houses the plurality of batteries (10) and the thermally conductive plate (20),
wherein the case (30) includes a grip part (36) which is not in contact with a side surface (23, 24) of the thermally conductive plate (20), wherein the grip part (36) regulates displacement of said two principal surfaces (21, 22) of the thermally conductive plate (20) in a direction orthogonal to said two principal surfaces (21, 22), the grip part (36) being in contact with at least one of the two principal surfaces (21, 22), and thereby holding an end part of the thermally conductive plate (20), and
wherein the grip part (36) includes a slit in which the end part of the thermally conductive plate (20) is inserted, wherein the grip part (36) is in contact with at least one of the two principal surfaces (21, 22) of the thermally conductive plate (20) via at least one of two facing surfaces of the grip part (36), wherein the two facing surfaces define the slit, wherein the grip part (36) is not in contact with the side surface (23) via a surface of the grip part (36) which connects the two facing surfaces which define the slit, **characterized in that**
the thermally conductive plate (20) and the grip part (36) are configured such that the thermally conductive plate (20) is detachable from the grip part (36) by sliding in the slit the thermally conductive plate (20) with respect to the grip part (36), and
the battery pack (1) further comprises a grease (38) which connects the surface which connects the two facing surfaces which define the slit, and the side surface (23) of the thermally conductive plate (20).

2. The battery pack (1) according to claim 1, wherein
the case (30) includes a pair of walls (31, 32),
the plurality of batteries (10) and the thermally conductive plate (20) are arranged between the pair of walls (31, 32),
the grip part (36) is provided to one of the pair of walls (31, 32), and
the case (30) further includes another grip part (37) which is provided to other one of the pair of walls (31, 32), wherein the another grip part (37) is not in contact with an other side surface (24) of the thermally conductive plate (20), the another grip part (37) regulates the displacement of the two principal surfaces (21, 22) of the thermally conductive plate (20) in the direction orthogonal to each of the two principal surfaces (21, 22), the another grip part (37) being in contact with at least one of the two principal surfaces (21, 22), and thereby holding an other end part of the thermally conductive plate (20).

3. The battery pack (1) according to claim 1 or 2, wherein the thermally conductive plate (20) includes a recessed part (21b), and is in contact with one battery of the plurality of batteries (10) in the recessed part (21b).

4. The battery pack (1) according to claim 3, wherein
the thermally conductive plate (20) further includes a plurality of other recessed parts (22a) on a surface opposite to a surface of the thermally conductive member (20) provided with the recessed part (21b), and is in contact with one battery of the plurality of batteries (10) in each of the plurality of other recessed parts (22a), and
the recessed part (21b) is provided between two other neighboring recessed parts (22a) of the plurality of other recessed parts (22a) in a direction in which the plurality of other recessed parts (22a) are aligned.

## Patentansprüche

1. Akkupack (1) mit:
einer Mehrzahl von Akkus (10);
einer thermisch leitenden Platte (20) mit zwei gegenüberliegenden Hauptflächen (21, 22), die durch Seitenflächen (23, 24) verbunden sind, welche thermisch leitende Platte (20) mit der Mehrzahl von Akkus (10) in Kontakt ist; und
einem Gehäuse (30), das die Mehrzahl von Akkus (10) und die thermisch leitende Platte (20) aufnimmt,
bei dem das Gehäuse (30) einen Griffteil (36) aufweist, der nicht mit einer Seitenfläche (23, 24) der thermisch leitenden Platte (20) in Kontakt ist, bei dem der Griffteil (36) einen Versatz der zwei Hauptflächen (21, 22) der thermisch leitenden Platte (20) in einer Richtung orthogonal zu den zwei Hauptflächen (21, 22) reguliert, wobei der Griffteil (36) mit mindestens einer der zwei Hauptflächen (21, 22) in Kontakt ist und dadurch einen Endteil der thermisch leitenden Platte (20) hält, und
bei dem der Griffteil (36) einen Schlitz aufweist, in den der Endteil der thermisch leitenden Platte (20) eingefügt ist, bei dem der Griffteil (36) mit mindestens einer der zwei Hauptflächen (21, 22) der thermisch leitenden Platte (20) über mindestens eine von zwei gegenüberliegenden Flächen des Griffteils (36) in Kontakt ist, bei dem die zwei gegenüberliegenden Flächen den Schlitz definieren, bei dem der Griffteil (36) nicht über eine Fläche des Griffteils (36), die die zwei gegenüberliegenden Flächen, die den Schlitz definieren, verbindet, mit der Seitenfläche (23) in Kontakt ist, **dadurch gekennzeichnet, dass**
die thermisch leitende Platte (20) und der Griffteil (36) derart ausgebildet sind, dass die thermisch leitende Platte (20) von dem Griffteil (36) durch Verschieben der thermisch leitenden Platte (20) in dem Schlitz in Bezug auf den Griffteil (36) abnehmbar ist, und
der Akkupack (1) ferner ein Schmiermittel (38) aufweist, das die Fläche, die die zwei gegenüberliegenden Flächen, die den Schlitz definieren, verbindet, und die Seitenfläche (23) der thermisch leitenden Platte (20) verbindet.

2. Akkupack (1) nach Anspruch 1, bei dem
das Gehäuse (30) ein Paar Wände (31, 32) aufweist,
die Mehrzahl von Akkus (10) und die thermisch leitende Platte (20) zwischen dem Paar Wände (31, 32) angeordnet sind,
der Griffteil (36) an einer des Paares Wände (31, 32) vorgesehen ist, und
das Gehäuse (30) ferner einen anderen Griffteil (37) aufweist, der an einer anderen des Paares Wände (31, 32) vorgesehen ist, bei dem der andere Griffteil (37) nicht mit einer anderen Seitenfläche (24) der thermisch leitenden Platte (20) in Kontakt ist, der andere Griffteil (37) den Versatz der zwei Hauptflächen (21, 22) der thermisch leitenden Platte (20) in der Richtung orthogonal zu jeder der zwei Hauptflächen (21, 22) reguliert, wobei der andere Griffteil (37) mit mindestens einer der zwei Hauptflächen (21, 22) in Kontakt ist und dadurch einen anderen Endteil der thermisch leitenden Platte (20) hält.

3. Akkupack (1) nach Anspruch 1 oder 2, bei dem die thermisch leitende Platte (20) einen vertieften Teil (21b) aufweist und in dem vertieften Teil (21b) mit einem Akku der Mehrzahl von Akkus (10) in Kontakt ist.

4. Akkupack (1) nach Anspruch 3, bei dem
die thermisch leitende Platte (20) ferner eine Mehrzahl anderer vertiefter Teile (22a) auf einer Fläche entgegengesetzt zu einer Fläche des thermisch leitenden Bauteils (20), die mit dem vertieften Teil (21b) versehen ist, aufweist und in jedem der Mehrzahl anderer vertiefter Teile (22a) mit einem Akku der Mehrzahl von Akkus (10) in Kontakt ist, und
der vertiefte Teil (21b) in einer Richtung, in der die Mehrzahl anderer vertiefter Teile (22a) ausgerichtet ist, zwischen zwei anderen benachbarten vertieften Teilen (22a) der Mehrzahl anderer vertiefter Teile (22a) vorgesehen ist.

## Revendications

1. Bloc-batterie (1) comprenant :
une pluralité de batteries (10) ;
une plaque thermoconductrice (20) comportant deux surfaces principales opposées (21, 22) reliées par des surfaces latérales (23, 24), ladite plaque thermoconductrice (20) étant en contact avec la pluralité de batteries (10) ; et
un boîtier (30) qui abrite la pluralité de batteries (10) et la plaque thermoconductrice (20),
dans lequel le boîtier (30) comprend une partie de préhension (36) qui n'est pas en contact avec une surface latérale (23, 24) de la plaque thermoconductrice (20), dans lequel la partie de préhension (36) régule le déplacement desdites deux surfaces principales (21, 22) de la plaque thermoconductrice (20) dans une direction orthogonale auxdites deux surfaces principales (21, 22), la partie de préhension (36) étant en contact avec au moins une des deux surfaces principales (21, 22), et maintenant ainsi une partie d'extrémité de la plaque thermoconductrice (20), et
dans lequel la partie de préhension (36) comprend une fente où la partie d'extrémité de la plaque thermoconductrice (20) est insérée, où la partie de préhension (36) est en contact avec au moins une des deux surfaces principales (21, 22) de la plaque thermoconductrice (20) par l'intermédiaire d'au moins une des deux surfaces en regard de la partie de préhension (36), où les deux surfaces en regard définissent la fente, où la partie de préhension (36) n'est pas en contact avec la surface latérale (23) par l'intermédiaire d'une surface de la partie de préhension (36) qui relie les deux surfaces en regard qui définissent la fente, **caractérisé par le fait que**
la plaque thermoconductrice (20) et la partie de préhension (36) sont configurées de telle sorte que la plaque thermoconductrice (20) peut être détachée de la partie de préhension (36) en faisant glisser dans la fente la plaque thermoconductrice (20) par rapport à la partie de préhension (36), et
le bloc-batterie (1) comprend en outre une graisse (38) qui relie la surface qui relie les deux surfaces en regard qui définissent la fente, et la surface latérale (23) de la plaque thermoconductrice (20).

2. Bloc-batterie (1) selon la revendication 1, dans lequel
le boîtier (30) comprend une paire de parois (31, 32),
la pluralité de batteries (10) et la plaque thermoconductrice (20) sont arrangées entre la paire de parois (31, 32),
la partie de préhension (36) est fournie à l'une des parois de la paire de parois (31, 32), et
le boîtier (30) comprend en outre une autre partie de préhension (37) qui est fournie à l'autre parois de la paire de parois (31, 32), où l'autre partie de préhension (37) n'est pas en contact avec une autre surface latérale (24) de la plaque thermoconductrice (20), l'autre partie de préhension (37) régule le déplacement des deux surfaces principales (21, 22) de la plaque thermoconductrice (20) dans la direction orthogonale à chacune des deux surfaces principales (21, 22), l'autre partie de préhension (37) étant en contact avec au moins une des deux surfaces principales (21, 22), et maintenant ainsi une autre partie d'extrémité de la plaque thermoconductrice (20).

3. Bloc-batterie (1) selon la revendication 1 ou 2, dans lequel la plaque thermoconductrice (20) comprend une partie en retrait (21b), et est en contact avec une batterie de la pluralité de batteries (10) dans la partie en retrait (21b).

4. Bloc-batterie (1) selon la revendication 3, dans lequel
la plaque thermoconductrice (20) comprend en outre une pluralité d'autres parties en retrait (22a) sur une surface opposée à une surface de l'élément thermoconducteur (20) pourvu de la partie en retrait (21b), et est en contact avec une batterie de la pluralité de batteries (10) dans chacune de la pluralité d'autres parties en retrait (22a), et
la partie en retrait (21b) est prévue entre deux autres parties en retrait voisines (22a) de la pluralité d'autres parties en retrait (22a) dans une direction où la pluralité d'autres parties en retrait (22a) sont alignées.
